# EUROPÄISCHE PATENTSCHRIFT

(11) **EP 2 388 186 B1**
(45) Veröffentlichungstag und Bekanntmachung des Hinweises auf die Patenterteilung: **14.02.2018**
(21) Anmeldenummer: 11164801.0
(22) Anmeldetag: 04.05.2011
(51) Int. Cl.: B62J 6/18, B62J 15/00

(54) **Radschützeranordnung mit Kabelaufnahme**
Mudguard assembly with cable fixing
Agencement de garde-boue avec fixation de câbles

(30) Priorität: 21.05.2010 DE 202010007101 U
(43) Veröffentlichungstag der Anmeldung: 23.11.2011
(73) Patentinhaber: sks metaplast Scheffer-Klute GmbH, 59846 Sundern (DE)
(72) Erfinder: Kordes, Sven, 59846 Sundern (DE); Krick, Peter, 59846 Sundern (DE); Grabski, Karsten, 59469 Ense (DE)
(74) Vertreter: Manske, Jörg

(56) Entgegenhaltungen:
- DE-U1-202009 004 770
- GB-A- 2 358 913
- TW-U- M 314 716
- TW-U- M 318 561
- TW-U- M 330 944

## Beschreibung

Die vorliegende Erfindung betrifft eine Radschützeranordnung gemäß dem Oberbegriff des Anspruchs 1.
Eine Radschützeranordnung der vorgenannten Art ist hinreichend bekannt. Sie wird vornehmlich oberhalb eines Hinterrads eines Zweirads, insbesondere eines Fahrrades, eingesetzt und dient - neben dem Spritzschutz - der Kabelführung, beispielsweise der Aufnahme eines Kabels für das Rücklicht. Eine derartige Radschützeranordnung, die einen Radschützer und einen Kabelkanal umfasst, ist beispielsweise aus der DE 20 2007 007 398 U1 bekannt geworden.
Die Anforderungen an die elektrischen Komponenten eines Zweirades, insbesondere eines Fahrrades, sind beachtlich. Es ist nicht selten der Fall, dass mehr als ein Kabel und/oder Kabel mit unterschiedlichen Querschnitten verlegt werden sollen. Die bekannten Radschützeranordnungen ermöglichen nur eine geringe Flexibilität hinsichtlich der Anzahl und Dicke der Kabel, insbesondere wenn die Kabelaufnahme als geschlossener Kanal ausgestaltet ist.
Das taiwanesische Gebrauchsmuster TW M 330 944 U offenbart eine Radschützeranordnung mit einem Radschützer und einer Kabelaufnahme, in der zwei Kabel aufgenommen werden können. Die Kabelaufnahme kann mittels einer auf den Radschützer aufschiebbaren Abdeckung abgedeckt werden.

Das gattungemäße Gebrauchsmuster TW M 318 561 U beschreibt eine Radschützeranordnung mit einem Radschützer und einer Kabelaufnahme. Die Kabelaufnahme umfasst zwei Halterungen, die zwischen sich einen Kabelkanal aufweisen. Ferner ist eine Abdeckung vorgesehen, die lösbar mit den Halterungen verbunden werden kann. Die Abdeckung verhindert, dass die Kabel aus dem Kabelkanal entweichen können und bewirkt somit auch eine Fixierung der Kabel innerhalb des Kabelkanals. Der Kabelkanal ist geschlossen ausgebildet, so dass er insbesondere aufgrund der definierten Größe der Kabeleinführöffnung keine Flexibilität hinsichtlich der Anzahl und/oder Dicke der in den Kabelkanal einzubringenden Kabel bietet.

Die GB 2 358 913 A betrifft einen Schmutzfänger für ein Kraftfahrzeug mit integrierter Bremsleuchte.

Die vorliegende Erfindung macht es sich zur Aufgabe, eine verbesserte Radschützeranordnung vorzuschlagen, insbesondere eine Radschützeranordnung vorzuschlagen, die eine verbesserte Handhabbarkeit und Flexibilität hinsichtlich der Verlegung von Kabeln ermöglicht.

Erfindungsgemäß wird diese Aufgabe durch eine Radschützeranordnung mit den kennzeichnenden Merkmalen des Anspruchs 1 gelöst. Erfindungsgemäß ist vorgesehen, dass die Klammerhalterungen und die mindestens eine lösbar mit diesen verbindbare Klammer an einer Unterseite des Radschützers angeordnet sind und der Kabelkanal offen ausgebildet ist. Dadurch, dass die Kabelaufnahme einen offenen Kabelkanal aufweist, der von einer ersten Klammerhalterung und einer zweiten Klammerhalterung gesäumt ist, wobei mindestens eine Klammer vorgesehen ist, die lösbar mit den Klammerhalterungen verbunden werden kann und zur Fixierung mindestens eines in dem Kabelkanal verlegten Kabels oder kabelförmigen Elements eingerichtet ist, kann eine wesentlich verbesserte Handhabbarkeit und Flexibilität hinsichtlich der Verlegung von Kabeln in einer Radschützeranordnung erreicht werden. Insbesondere müssen die Kabel nicht durch einen geschlossenen Kanal geschoben werden. Vielmehr können die Kabel in den Kabelkanal eingelegt und mit den Klammern fixiert werden. Bei Bedarf können die Klammern auch wieder gelöst und weitere oder andere Kabel in den Kabelkanal eingelegt werden.

Weitere vorteilhafte Ausgestaltungen der vorgeschlagenen Erfindung ergeben sich insbesondere aus den Merkmalen der Unteransprüche. Die Merkmale der verschiedenen Ansprüche können beliebig miteinander kombiniert werden.

In einer vorteilhaften Ausgestaltung der vorgeschlagenen Radschützeranordnung kann beispielsweise vorgesehen sein, dass die Klammerhalterungen ein U-förmiges Profil umfassen. Ein U-förmiges Profil kann unproblematisch, beispielsweise in einem Spritzgussverfahren, hergestellt werden und eignet sich zum Einstecken eines entsprechend ausgeformten Anschlussmittels der Klammer. Darüber hinaus bietet ein U-förmiges Profil, welches sich beispielsweise über die gesamte Länge des Radschützers erstreckt, die Möglichkeit, die Klammer bzw. die Klammern an beliebiger Stelle lösbar mit den Klammerhalterungen zu verbinden. Hierdurch kann sehr individuell auf die jeweils anzutreffenden Anforderungen reagiert werden.

In einer weiteren vorteilhaften Ausgestaltung der vorgeschlagenen Erfindung kann vorgesehen sein, dass das U-förmige Profil zwei Schenkel aufweist, wobei mindestens einer der Schenkel an seinem freien Ende mit einer Wulst oder einem Vorsprung ausgestattet ist. Die Wulst kann beispielsweise eine Verdickung eines Anschlussmittels der Klammer hintergreifen, so dass sich eine belastbarere, jedoch nachträglich lösbare Verbindung zwischen der Klammer und der Klammerhalterung ergibt.

Als Pendant zu der Wulst bzw. dem Vorsprung der Klammerhalterungen des Radschützers kann vorzugsweise vorgesehen sein, dass das Anschlussmittel mit einer Verdickung ausgestattet ist, die in einem eingesteckten Zustand des Anschlussmittels von der Wulst oder dem Vorsprung der Klammerhalterung hintergriffen wird. Ein entsprechend ausgestaltetes Anschlussmittel der Klammer ermöglicht eine vorteilhafte formschlüssige Verbindung zwischen der Klammer und der Klammerhalterung bzw. dem Radschützer.

In einer weiteren vorteilhaften Ausgestaltung der vorgeschlagenen Erfindung kann vorgesehen sein, dass die Klammer mindestens eine Brücke aufweist, die zwischen den Anschlussmitteln angeordnet ist. Die Klammer kann entsprechend materialsparend hergestellt sein, indem beispielsweise nur eine Brücke zwischen den Anschlussmitteln vorgesehen ist. Wahlweise können aber auch mehrere Brücken, die beispielsweise als flache Profile ausgestaltet sein können, zwischen den Anschlussmitteln vorgesehen sein.

Um die bzw. das Kabel so zu fixieren, dass es sich nicht innerhalb des Kabelkanals bewegt, kann vorgesehen sein, dass die Klammer mit mindestens einem Niederhalter ausgestattet ist. Der Niederhalter drückt das bzw. die Kabel an den Boden des Kabelkanals und verhindert so, dass die Kabel in dem Kabelkanal bewegt werden können.

In einer vorteilhaften Ausgestaltung der vorgeschlagenen Radschützeranordnung kann vorgesehen sein, dass die Klammer aus einem Kunststoff oder Blech hergestellt ist. Die vorgenannten Materialien ermöglichen eine preiswerte Herstellung der Klammer und verleihen ihr vorteilhafte elastische Eigenschaften.

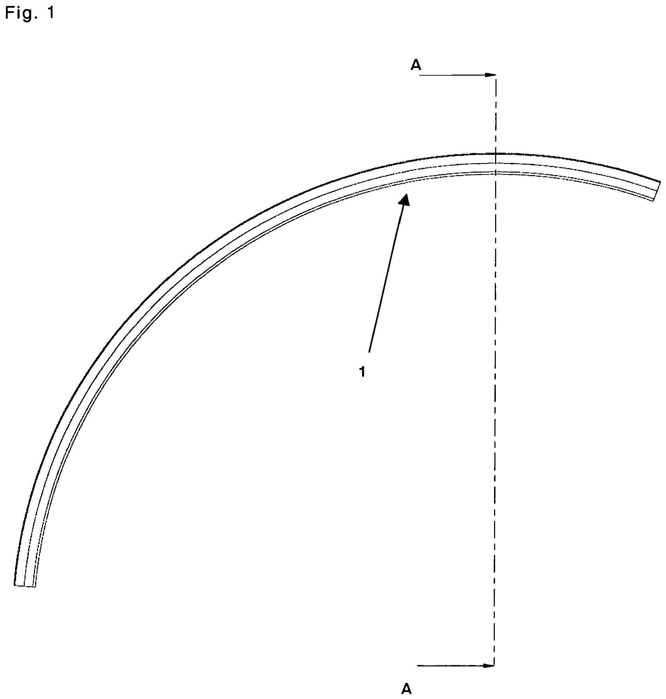

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine erfindungsgemäße Radschützeranordnung in einer seitlichen Ansicht;

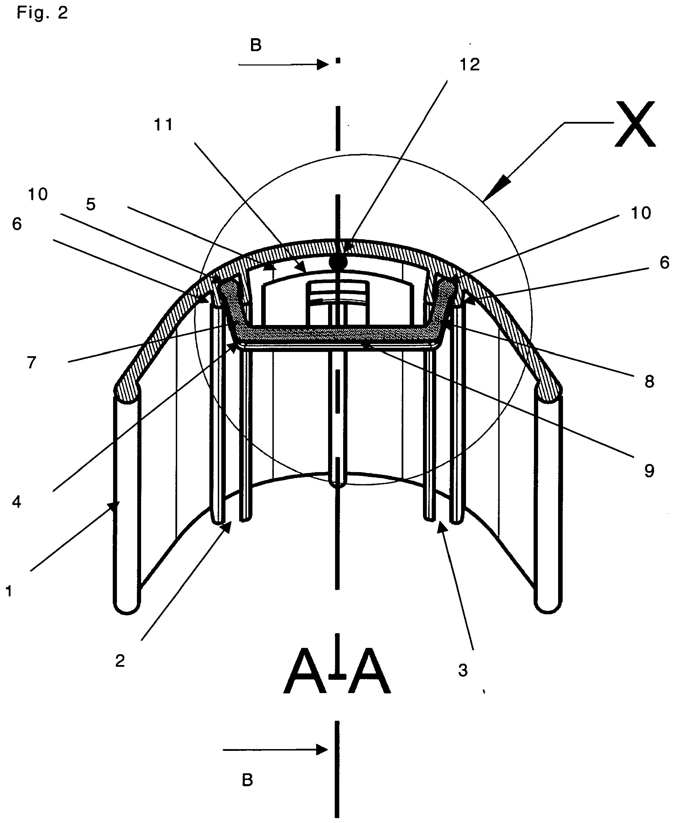

- Fig. 2: eine erfindungsgemäße Radschützeranordnung in einer Schnittansicht "A-A";

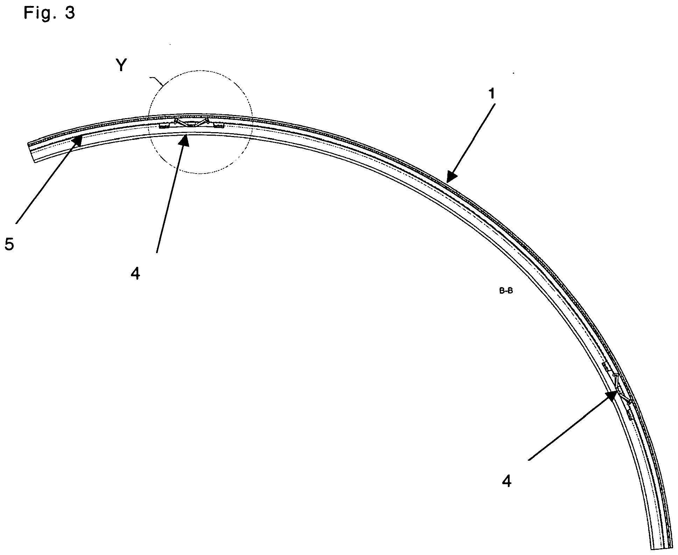

- Fig. 3: eine erfindungsgemäße Radschützeranordnung in einer Schnittansicht "B-B";

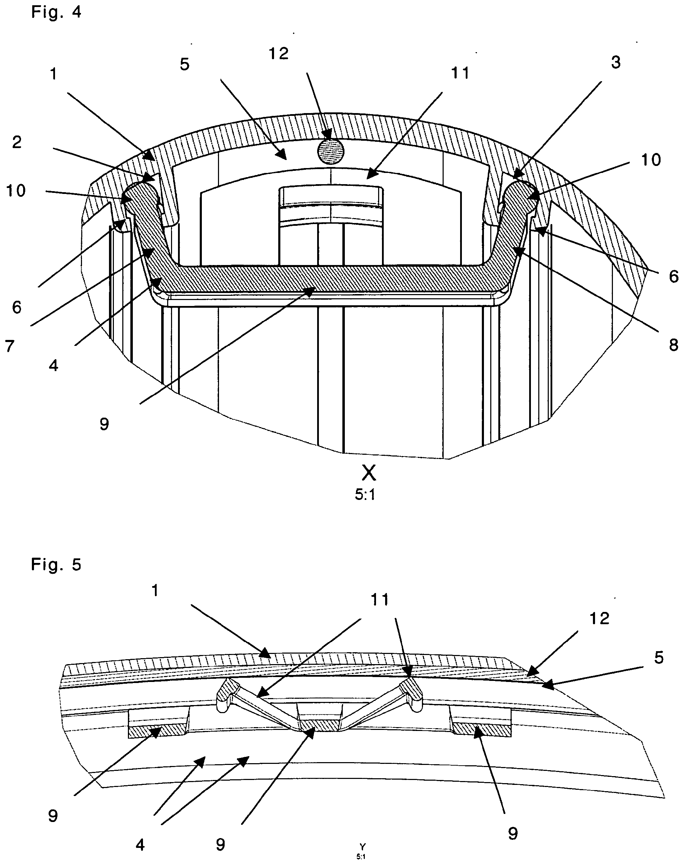

- Fig. 4: eine erfindungsgemäße Radschützeranordnung in einer Detailvergrößerung "X";
- Fig. 5: eine erfindungsgemäße Radschützeranordnung in einer Detailvergrößerung "Y";

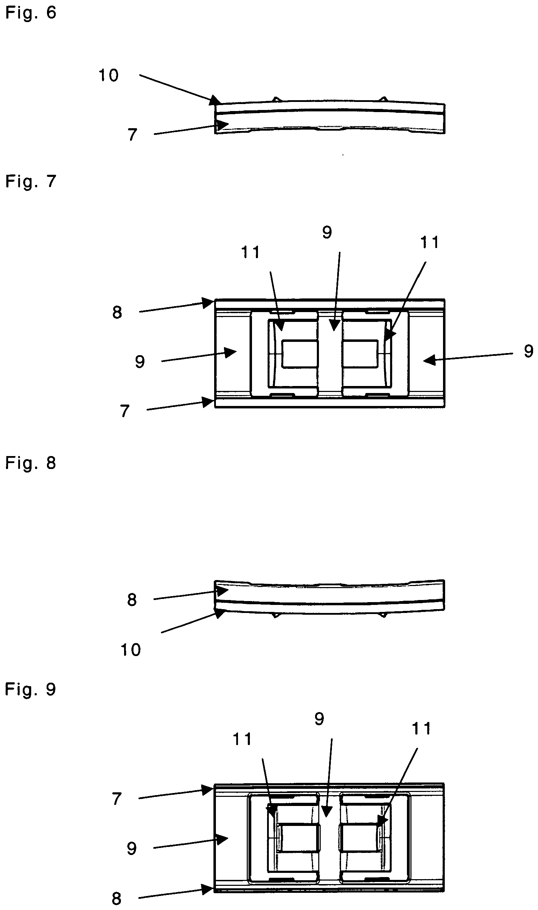

- Fig. 6: eine Klammer für eine erfindungsgemäße Radschützeranordnung in einer seitlichen Ansicht;
- Fig. 7: eine Klammer für eine erfindungsgemäße Radschützeranordnung in einer Ansicht von unten;
- Fig. 8: eine Klammer für eine erfindungsgemäße Radschützeranordnung in einer seitlichen Ansicht;
- Fig. 9: eine Klammer für eine erfindungsgemäße Radschützeranordnung in einer Draufsicht.

Folgende Bezugszeichen werden in den Abbildungen verwendet:
- 1: Radschützer
- 2: erste Klammerhalterung
- 3: zweite Klammerhalterung
- 4: Klammer
- 5: Kabelkanal
- 6: Wulst oder Vorsprung
- 7: erstes Anschlussmittel
- 8: zweites Anschlussmittel
- 9: Brücke
- 10: Verdickung
- 11: Niederhalter
- 12: Kabel

Eine erfindungsgemäße Radschützeranordnung umfasst im Wesentlichen einen Radschützer 1 und eine Kabelaufnahme.

Bei dem Radschützer 1 handelt es sich vorzugsweise um ein Formteil aus Kunststoff mit einem etwa C-förmigen Querschnitt. In Längsrichtung ist der Radschützer vorzugsweise gekrümmt, so dass der Radschützer 1 in einer Seitenansicht eine teilkreisförmige Gestalt aufweist. Der Radschützer 1 ist letztendlich dazu eingerichtet, oberhalb eines Rades, beispielsweise oberhalb eines Hinterrades eines Fahrrades, montiert zu werden. Es kommen selbstverständlich auch andere Materialien, beispielsweise Aluminium, Blech, etc. und Formen für den Radschützer in Frage.

Die Kabelaufnahme umfasst im Wesentlichen eine erste Klammerhalterung 2, eine zweite Klammerhalterung 3 und mindestens eine Klammer 4, vorzugsweise eine Anzahl von Klammern 4.

Bei der Klammerhalterung 2, 3 handelt es sich im Wesentlichen um ein U-förmiges Profil, welches sich in Längsrichtung des Radschützers erstreckt. Vorzugsweise sind die Schenkel des U-förmigen Profils an ihrem freien Ende mit einer Wulst oder einem Vorsprung 6 ausgestattet. Die zwei Klammerhalterungen 2, 3 verlaufen parallel zueinander. Zwischen sich bilden die Klammerhalterungen 2, 3 einen nach oben offenen Kanal zur Aufnahme mindestens eines Kabels 12, beispielsweise eines Kabels für die Stromversorgung des Rücklichtes eines Fahrrades, oder sonstigen kabelförmigen Elementen, sprich einen Kabelkanal 5, aus. Bei den kabelförmigen Elementen kann es sich beispielsweise auch um Bowdenzüge oder ähnliche Einrichtungen handeln.

Bei der Klammer 4 handelt es sich im Wesentlichen um ein Formteil mit einem ersten Anschlussmittel 7, einem zweiten Anschlussmittel 8 und mindestens einer Brücke 9. Die Klammer 4 ist grundsätzlich dazu eingerichtet, den Kabelkanal 5 partiell zu überdecken, so dass das in dem Kabelkanal 5 aufgenommene Kabel 12 nicht herausfallen kann. Die Brücke 9 ist zwischen den Anschlussmitteln 7, 8 angeordnet. In einer einfachen Ausführung ist die Brücke 9 als flaches Profil ausgestaltet, welches das erste Anschlussmittel 7 mit dem zweiten Anschlussmittel 8 verbindet. Die Anschlussmittel 7, 8 sind dazu eingerichtet, in die Klammerhalterungen 2, 3 eingesteckt zu werden und eine kraft- und/oder formschlüssige Verbindung mit den Klammerhalterungen 2, 3 einzugehen. Im einfachsten Fall ist das Anschlussmittel 7, 8 als flaches, längliches Profil ausgestaltet. Es kann beispielsweise zusätzlich vorgesehen sein, dass das Anschlussmittel 7, 8 mit einer Verdickung 10 ausgestattet ist, die in einem eingesteckten Zustand von der Wulst 6 hintergriffen wird.

Es kann ferner vorgesehen sein, dass die Klammer 4 mit mindestens einem Niederhalter 11 ausgestattet ist. Der Niederhalter 11 erstreckt sich bevorzugt in Längsrichtung und in einem flachen Winkel beispielsweise von einer Brücke 9. Es ist vorzugsweise vorgesehen, dass die Klammer drei Brücken 9 in Form flacher Profile aufweist, wobei sich zwei Niederhalter 11 von der mittleren Brücke 9 erstrecken.

Weitere Merkmale der vorgeschlagenen Erfindung ergeben sich aus einer Funktionsbeschreibung.

In einem ersten Montageschritt werden beispielsweise ein oder mehrere Kabel 12 in den Kabelkanal 5 eingelegt. Anschließend können eine Klammer 4 oder eine Anzahl von Klammern in die Klammerhalterungen 2, 3 eingeclipst werden. Das bzw. die Kabel 12 werden nunmehr durch die Klammern 4 in dem Kabelkanal 5 gehalten. Der Niederhalter 11 drückt das bzw. die Kabel 12 in Richtung des Kabelkanalbodens.

Um weitere Kabel hinzuzufügen oder verlegte Kabel zu entfernen, müssen lediglich die Klammern 4 entfernt werden. Da die Klammer 4 mittels der Anschlussmittel 7, 8 lösbar mit dem Radschützer 1 bzw. den Klammerhalterungen 2, 3 verbunden ist, kann dies zerstörungsfrei, beispielsweise mittels einer Zange oder eines Schraubendrehers, aber auch grundsätzlich per Hand durchgeführt werden. Anschließend kann die Klammer 4 bzw. können die Klammern 4 wieder eingeclipst werden.

Die Radschützeranordnung ist hier vornehmlich am Beispiel einer Radschützeranordnung für ein Fahrrad beschrieben worden, was jedoch nicht ausschließt, dass die Radschützeranordnung auch in anderen Bereichen, beispielsweise an einem motorisierten Zweirad, Quad, Roller, etc. eingesetzt werden könnte.

## Patentansprüche

1. Radschützeranordnung, umfassend mindestens
- einen Radschützer (1) und
- eine Kabelaufnahme,
wobei die Kabelaufnahme eine erste Klammerhalterung (2) und eine zweite Klammerhalterung (3) umfasst, die zwischen sich einen Kabelkanal (5) aufweisen, der offen ausgebildet ist, wobei mindestens eine Klammer (4) vorgesehen ist, die lösbar mit den Klammerhalterungen (2, 3) verbunden werden kann und zur Fixierung mindestens eines in dem Kabelkanal (5) verlegten Kabels (12) oder kabelförmigen Elements eingerichtet ist **dadurch gekennzeichnet, dass** die Klammerhalterungen (2, 3) und die mindestens eine lösbar mit diesen verbindbare Klammer (4) an einer Unterseite des Radschützers (1) angeordnet sind.

2. Radschützeranordnung nach Anspruch 1, **dadurch gekennzeichnet, dass** die Klammerhalterungen (2, 3) ein im Querschnitt U-förmiges Profil umfassen.

3. Radschützeranordnung nach einem der vorhergehenden Ansprüche, **dadurch gekennzeichnet, dass** sich die Klammerhalterungen (2, 3) in Längsrichtung des Radschützers (1) erstrecken.

4. Radschützeranordnung nach einem der vorhergehenden Ansprüche, **dadurch gekennzeichnet, dass** die Klammerhalterungen (2, 3) parallel zueinander angeordnet sind.

5. Radschützeranordnung nach einem der Ansprüche 2 bis 4, **dadurch gekennzeichnet, dass** das U-förmige Profil zwei Schenkel aufweist, wobei mindestens einer der Schenkel an seinem freien Ende mit einer Wulst oder einem Vorsprung (6) ausgestattet ist.

6. Radschützeranordnung nach einem der vorhergehenden Ansprüche, **dadurch gekennzeichnet, dass** die Klammer (4) ein erstes Anschlussmittel (7) zur lösbaren Verbindung mit der ersten Klammerhalterung (2) und ein zweites Anschlussmittel (8) zur Verbindung mit der zweiten Klammerhalterung (3) aufweist.

7. Radschützeranordnung nach einem der vorhergehenden Ansprüche, **dadurch gekennzeichnet, dass** die Klammer (4) den Kabelkanal (5) mindestens partiell überdeckt.

8. Radschützeranordnung nach einem der Ansprüche 6 oder 7, **dadurch gekennzeichnet, dass** jedes der Anschlussmittel (7, 8) mit einer Verdickung (10) ausgestattet ist, die in einem eingesteckten Zustand des Anschlussmittels (7, 8) von dem Vorsprung oder der Wulst (6) hintergriffen wird.

9. Radschützeranordnung nach einem der Ansprüche 6 bis 8, **dadurch gekennzeichnet, dass** die Klammer (4) mindestens eine Brücke (9) aufweist, die zwischen den Anschlussmitteln (7, 8) angeordnet ist.

10. Radschützeranordnung nach Anspruch 9, **dadurch gekennzeichnet, dass** die Brücke (9) als flaches Profil ausgestaltet ist.

11. Radschützeranordnung nach mindestens einem der vorhergehenden Ansprüche, **dadurch gekennzeichnet, dass** die Klammer (4) mit mindestens einem Niederhalter (11) ausgestattet ist.

12. Radschützeranordnung nach Anspruch 11, **dadurch gekennzeichnet, dass** sich der Niederhalter (11) in Längsrichtung und in einem flachen Winkel von der Brücke (9) erstreckt.

13. Radschützeranordnung nach einem der vorhergehenden Ansprüche, **dadurch gekennzeichnet, dass** die Klammer (4) aus einem Kunststoff oder Blech hergestellt ist.

## Claims

1. Mudguard arrangement, comprising at least
- a mudguard (1) and
- a cable receiving member,
wherein the cable receiving member comprises a first bracket retention member (2) and a second bracket retention member (3), which between them have a cable channel (5) which is constructed in an open manner, wherein there is provided at least one bracket (4) which can be releasably connected to the bracket retention members (2, 3) and which is configured to fix at least one cable (12) or cable-like element which is laid in the cable channel (5), **characterised in that** the bracket retention members (2, 3) and the at least one bracket (4) which can be releasably connected thereto are arranged at a lower side of the mudguard (1).

2. Mudguard arrangement according to claim 1, **characterised in that** the bracket retention members (2, 3) comprise a profile which is U-shaped in cross-section.

3. Mudguard arrangement according to either of the preceding claims, **characterised in that** the bracket retention members (2, 3) extend in the longitudinal direction of the mudguard (1).

4. Mudguard arrangement according to any one of the preceding claims, **characterised in that** the bracket retention members (2, 3) are arranged parallel with each other.

5. Mudguard arrangement according to any one of claims 2 to 4, **characterised in that** the U-shaped profile has two legs, wherein at least one of the legs is provided at the free end thereof with a bead or a projection (6).

6. Mudguard arrangement according to any one of the preceding claims, **characterised in that** the bracket (4) has a first connection means (7) for releasable connection to the first bracket retention member (2) and a second connection means (8) for connection to the second bracket retention member (3).

7. Mudguard arrangement according to any one of the preceding claims, **characterised in that** the bracket (4) at least partially covers the cable channel (5).

8. Mudguard arrangement according to either claim 6 or 7, **characterised in that** each of the connection means (7, 8) is provided with a thickened portion (10) which in an inserted state of the connection means (7, 8) is engaged behind by the projection or the bead (6).

9. Mudguard arrangement according to any one of claims 6 to 8, **characterised in that** the bracket (4) has at least one bridge (9) which is arranged between the connection means (7, 8).

10. Mudguard arrangement according to claim 9, **characterised in that** the bridge (9) is constructed as a flat profile.

11. Mudguard arrangement according to at least one of the preceding claims, **characterised in that** the bracket (4) is provided with at least one holding-down member (11).

12. Mudguard arrangement according to claim 11, **characterised in that** the holding-down member (11) extends in the longitudinal direction and at a flat angle from the bridge (9).

13. Mudguard arrangement according to any one of the preceding claims, **characterised in that** the bracket (4) is produced from a plastics material or sheet metal.

## Revendications

1. Agencement de garde-boue, comprenant au moins
- un garde-boue (1) et
- un logement de câble,
dans lequel le logement de câble comprend une première fixation par agrafe (2) et une deuxième fixation par agrafe (3) qui comprennent entre elles un canal de câble (5) réalisé ouvert,
dans lequel il est prévu au moins une agrafe (4) qui peut être reliée de manière amovible aux fixations par agrafes (2, 3) et qui est conçue pour fixer au moins un câble (12) ou élément en forme de câble posé dans le canal de câble (5),
**caractérisé en ce que** les fixations par agrafes (2, 3) et l'au moins une agrafe (4) pouvant être reliée de manière amovible à celles-ci sont agencées au niveau d'un dessous du garde-boue (1).

2. Agencement de garde-boue selon la revendication 1, **caractérisé en ce que** les fixations par agrafes (2, 3) comprennent un profilé en forme de U en coupe transversale.

3. Agencement de garde-boue selon l'une quelconque des revendications précédentes, **caractérisé en ce que** les fixations par agrafes (2, 3) s'étendent dans la direction longitudinale du garde-boue (1).

4. Agencement de garde-boue selon l'une quelconque des revendications précédentes, **caractérisé en ce que** les fixations par agrafes (2, 3) sont agencées parallèlement l'une à l'autre.

5. Agencement de garde-boue selon l'une quelconque des revendications 2 à 4, **caractérisé en ce que** le profilé en forme de U présente deux branches, au moins l'une des branches étant munie d'un bourrelet ou d'une partie en saillie (6) au niveau de son extrémité libre.

6. Agencement de garde-boue selon l'une quelconque des revendications précédentes, **caractérisé en ce que** l'agrafe (4) comporte un premier moyen de raccordement (7) pour la liaison amovible avec la première fixation par agrafe (2) et un deuxième moyen de raccordement (8) pour la liaison avec la deuxième fixation par agrafe (3).

7. Agencement de garde-boue selon l'une quelconque des revendications précédentes, **caractérisé en ce que** l'agrafe (4) recouvre au moins partiellement le canal de câble (5).

8. Agencement de garde-boue selon l'une quelconque des revendications 6 ou 7, **caractérisé en ce que** chacun des moyens de raccordement (7, 8) est muni d'un épaississement (10) qui est pris par-derrière par la partie en saillie ou le bourrelet (6) lorsque le moyen de raccordement (7, 8) est monté.

9. Agencement de garde-boue selon l'une quelconque des revendications 6 à 8, **caractérisé en ce que** l'agrafe (4) comporte au moins un pont (9) qui est agencé entre les moyens de raccordement (7, 8).

10. Agencement de garde-boue selon la revendication 9, **caractérisé en ce que** le pont (9) est réalisé comme un profilé plat.

11. Agencement de garde-boue selon au moins l'une quelconque des revendications précédentes, **caractérisé en ce que** l'agrafe (4) est munie d'au moins un dispositif de maintien (11).

12. Agencement de garde-boue selon la revendication 11, **caractérisé en ce que** le dispositif de maintien (11) s'étend dans la direction longitudinale et suivant un angle plat par rapport au pont (9).

13. Agencement de garde-boue selon l'une quelconque des revendications précédentes, **caractérisé en ce que** l'agrafe (4) est fabriquée en plastique ou en tôle.
